# EUROPEAN PATENT SPECIFICATION

(11) **EP 1 869 856 B1**
(45) Date of publication and mention of the grant of the patent: **02.09.2009**
(21) Application number: 06725541.4
(22) Date of filing: 04.04.2006
(51) Int. Cl.: H04L 27/156

(54) **METHOD AND ARRANGEMENT FOR RECOVERING A BINARY DC-FREE CODE FROM A FREQUENCY MODULATED SIGNAL**
VERFAHREN UND ANORDNUNG ZUM WIEDERHERSTELLEN EINES BINÄREN GLEICHSTROMFREIEN CODES AUS EINEM FREQUENZMODULIERTEN SIGNAL
PROCEDE ET DISPOSITIF DE RECUPERATION D'UN CODE BINAIRE EXEMPT DE COURANT CONTINU A PARTIR D'UN SIGNAL MODULE EN FREQUENCE

(30) Priority: 14.04.2005 EP 05008160
(43) Date of publication of application: 26.12.2007
(73) Proprietor: Thomson Licensing, 92100 Boulogne-Billancourt (FR)
(72) Inventor: SCHMITT, Dirk, 78052 Pfaffenweiler (DE); IKONOMU, Alkis, 78050 Villingen-Schwenningen (DE); KABUTZ, Marten, 78048 Villingen-Schwenningen (DE)
(74) Representative: Kurth, Dieter
(86) International application number: PCT/EP2006/061305
(87) International publication number: WO 2006/108777

(56) References cited:
- EP-A- 1 220 452
- US-A- 4 716 579
- US-A- 5 506 824
- US-A- 6 011 816
- STEENAART W ET AL: "PERFORMANCE IMPROVEMENT OF A BINARY QUANTIZED ALL-DIGITAL PHASE-LOCKED LOOP WITH A NEW AIDED-ACQUISITION TECHNIQUE" IEEE TRANSACTIONS ON COMMUNICATIONS, IEEE SERVICE CENTER, PISCATAWAY, NJ, US, vol. COM-32, no. 12, December 1984 (1984-12), pages 1269-1276, XP000758575 ISSN: 0090-6778

## Description

### FIELD OF THE INVENTION

The present invention relates to a method and an arrangement for recovering a binary DC-free code from a frequency-modulated signal, without any analog signal demodulation of the frequency-modulated signal and low expenditure. A binary DC-free code included in a frequency-modulated signal is e.g. a so-called ATIP wobble signal embossed as a groove in recordable optical storage media as e.g. CD-R and CD-RW. Therefore, the invention relates more particularly to an ATIP bi-phase channel bit and timing recovery in a deteriorated wobble channel as e.g. required for high speed recording on optical storage media.

### BACKGROUND OF THE INVENTION

DC-free coding is widely employed in digital communication and magnetic or optical recording systems. DC-free means that the coded sequence has no DC spectral component. The dc-component of a signal is the average voltage or integral over a certain time interval. Binary sequences with spectral nulls at zero frequency, or also called matched spectral null codes have found widespread application in communication and recording systems and it is well known to demodulate a frequency-modulated signal containing a binary code by sampling and latching the frequency-modulated signal and digitally comparing a predetermined count value with a count value derived from the high frequency clock and the frequency-modulated signal, which normally requires an analog signal demodulation of the center frequency of the frequency-modulated analog signal. Such a method is e.g. disclosed in US 5506824. Disadvantages of said method are the necessary analog signal demodulation by a bi-phase converter and a phase lock loop in addition to a digital phase lock loop and that for high-speed applications the frequency clock has to be increased to provide the necessary resolution for the high-speed counter. That means that disadvantageously analog and digital means have to be used for implementation in an integrated circuit and that the disclosed method requires a very high sample frequency to provide the resolution, which is necessary to correct clock cycle variations in a wobble frequency signal of high frequency. Furthermore, said method is not very resistant against noise as well as jitter of the frequency-modulated signal.

### SUMMARY OF THE INVENTION

It is an aspect of the invention to provide a method and an arrangement for digital recovering a binary DC-free code from a frequency modulated analog signal with digital means exclusively and for high-speed applications and with low expenditure.

This is achieved by an analog to digital conversion of said frequency modulated analog signal having a binary DC-free code inside and using a digital phase lock loop and a phase trellis for bit and timing recovery. The error signal caused by using said digital phase lock loop becomes removed by using the phase trellis for demodulation. The phase shift is used to generate said phase trellis and the combination of a strobe signal from a wobble phase counter of said digital phase lock loop with the phase trellis signal is used for bit and timing recovery of said binary DC-free code included in a frequency modulated analog signal. The digital phase lock loop is used twice, for clock and timing recovery respectively as well as in connection with the phase trellis for bi-phase signal and clock detection, which results in low expenditure. The combination of a strobe signal from a wobble phase counter of said digital phase lock loop with the phase trellis signal comprises a biphase channel bit detector for recovering the bit length and comprises a bi-phase clock generator for timing and bi-phase clock recovering respectively. Therefore, a maximum likelihood detection is applied to the phase trellis.

There is no need for a frequency divider to increase the frequency of the bi-phase clock and an analog phase lock loop for demodulating the center frequency of the frequency modulated analog signal, which makes the present method and a corresponding arrangement advantageously applicable for high-speed applications as e.g. high speed recording optical disc media like CD-R and CD-RW. Digital means are used exclusively, which makes it easier to implement the arrangement in a digital environment of an integrated circuit.

For a better understanding of the invention, an exemplary embodiment is specified in the following description. It is understood that the invention is not limited to this exemplary embodiment concerning the use of the invention and that specified features can also expediently be combined or modified without departing from the scope of the present invention.
In a particular preferred embodiment of the present invention, the gist of the invention is e.g. used for detecting a so-called ATIP information from an embossed wobble groove of an optical disc as required for recording optical disc media like CD-R and CD-RW. The abbreviation ATIP means absolute time in pre-groove, which contains time code information to establish a current location on the disc. The digital modulation of the ATIP time-code signal is realized by a bi-phase-mark modulation of a carrier frequency represented by a frequency modulated analog signal having a binary DC-free code inside. According to the invention the wobble frequency modulated signal is extracted by using a digital phase lock loop with a quadrature phase detector for reproducing the ATIP bi-phase-mark channel bit and bi-phase clock signal. The quadrature phase detector signals are used to form a phase trellis diagram. The phase trellis is used for demodulation, so that the error signal caused by said demodulation becomes filtered out, which avoids the necessity of a second phase lock loop as well as the use of an increased clock signal, which conventionally are needed for recovering a binary DC-free code with a phase deviation range of more than one wobble signal period. A maximum likelihood detection is applied to the phase trellis by using a matched filter to provide a bi-phase channel bit signal and a clock phase error signal, which shifts the phase of a pulse generator for providing a biphase clock signal, which is in time with the sampling point for the bi-phase channel bit signal for recovering said binary code.

Furthermore, the present solution is advantageously applicable for high-speed recording optical media because said increased clock signal for a data and carrier frequency comparison according to prior solutions is not necessary, which also improves noise rejections. The invention is due to said features general applicable for recovering a binary DC-free code from a transmitted frequency modulated analog signal, which makes it also applicable for further data transmission systems based on frequency modulation as e.g. modem or wireless data communication systems. The specific nature of the invention as well as other objects, advantages, features and uses of the invention will become evident from the following description of a preferred embodiment taken in conjunction with the accompanying drawings.

### BRIEF DESCRIPTION OF THE DRAWINGS

In the figures:
- Fig. 1: shows a spread spectrum diagram of an ATIP wobble signal,
- Fig. 2: is a table illustrating a bi-phase-mark modulation rule,
- Fig.3: is a block diagram of an arrangement for digital recovering a binary DC-free code from a frequency- modulated signal,
- Fig. 4: shows phase diagrams of phase detectors in Figure 3,
- Fig. 5: is a phase trellis signal diagram,
- Fig. 6: shows details of an ATIP signal detector,
- Fig. 7: illustrates a phase trellis and matched filter output signal for bi-phase channel bit recovering,
- Fig. 8: illustrates phase trellis and a phase error signal for in phase bi-phase clock,
- Fig. 9: illustrates phase trellis and a phase error signal for trailing bi-phase clock,
- Fig. 10: illustrates phase trellis and a phase error signal for leading bi-phase clock,
- Fig. 11: is state table for state transitions of a +/- 2π phase detector,
- Fig. 12: is a block diagram of an arrangement for digital recovering a binary DC-free code from a frequency-modulated signal.

### DETAILED DESCRIPTION OF PREFERRED EMBODIMENTS

The use of the same reference symbols in different drawings indicates similar or all items.

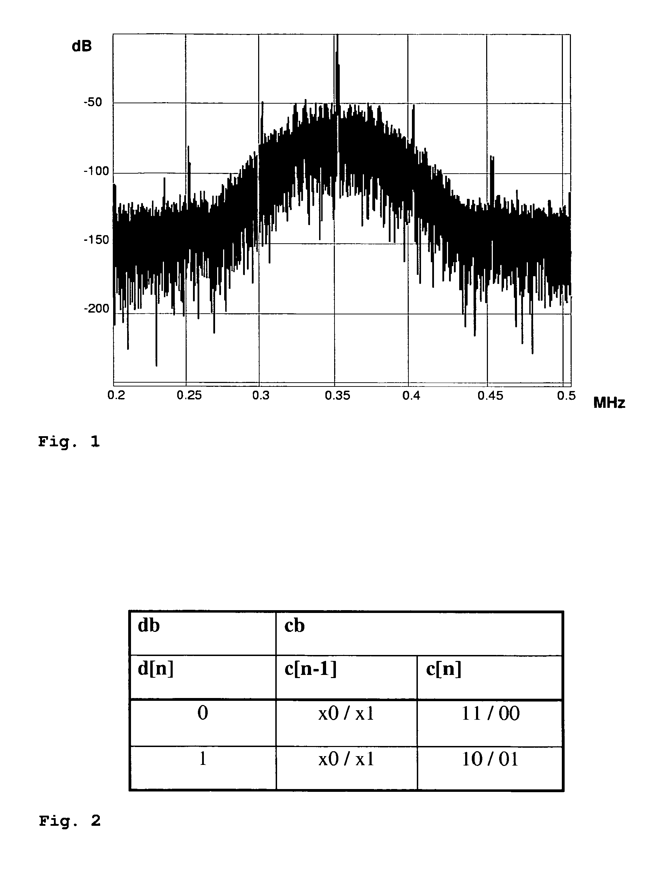

Fig. 1 shows a spread spectrum diagram of an ATIP wobble signal at 16 times recording speed, which has a total harmonic distortion of less than minus 40 decibel dB within a frequency range from 0.2 to 0.50 MHz. Such kind of frequency-modulated analog signal having a binary DC-free code inside will be used to illustrate the invention in more details.

The ATIP wobble signal is embossed as a groove in recordable CD-R and CD-RW media. The ATIP wobble signal is a frequency-modulated signal wherein a modulated time-code increases monotonically throughout the disc media. The center frequency or so-called carrier frequency of the ATIP wobble signal is 22.05 kHz and the deviation regarding to a channel bit 1 is +1 kHz +/- 10% and regarding to channel bit 0 is -1 kHz +/- 10%. So the spread spectrum of an ATIP wobble channel looks like in Figure 1. The digital modulation of the ATIP time-code signal is realized by a bi-phase-mark modulation. The state diagram of the bi-phase-mark is shown in Figure 2. The table in Figure 2 illustrates the bi-phase-mark modulation rule, which means that a data bit db 0 is coded if channel bits cb 11 or 00 occur and the previous channel bits have been x0 or x1 and that a data bit db 1 is coded if channel bits cb 10 or 01 occur and the previous channel bits have been x0 or x1, wherein x means that it is independent whether there occurred 0 or 1. The synchronisation code of an ATIP frame is realized with a bi-phase-mark modulation violation. The eight synchronisation channel bits are 1 1 1 0 1 0 0 0 if the preceding channel bit is 0 and 0 0 0 1 0 1 1 1 if the preceding channel bit is 1. The time of one ATIP frame is the same time as one subcode frame in recording channel. Therefore, the content of the ATIP frame is direct related to the data content in the recording channel. The wobble frequency and the ATIP bi-phase clock are derived from the same frequency source, which has a clock of 44.1 kHz for recording at single speed. The channel bit period is 3.5 of a wobble period, which means 6300 bit/s. The highest frequency deviation of the ATIP signal is generated by a synchronisation pattern in an ATIP frame, which comprises three bi-phase channel bits. The maximum frequency deviation over the three bi-phase channel bits is therefore 11.55 kHz, which correlates with a half period of the 22.05 kHz wobble. For recording on optical media, the wobble frequency, the bi-phase clock and the bi-phase-mark channel bit signal have to be extracted from said frequency modulated analog signal. Recovering the wobble frequency is a specific requirement for optical recording, however, recovering a bi-phase channel bit signal 16 and a bi-phase clock signal 15, which is in time with the sampling point for the biphase channel bit signal 16, is sufficient for recovering said binary code from a frequency-modulated signal.

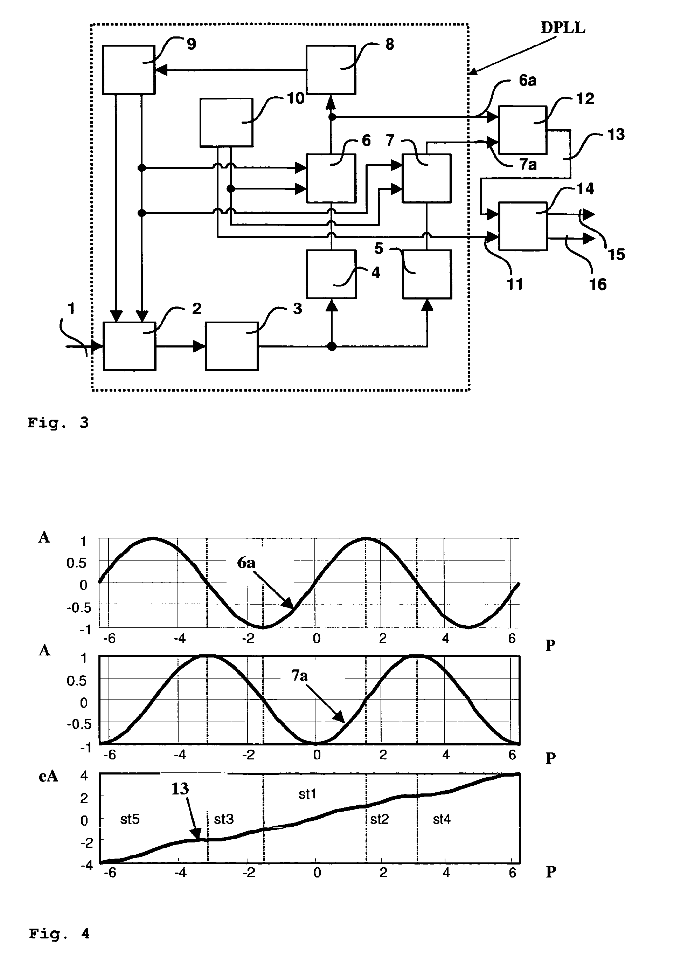

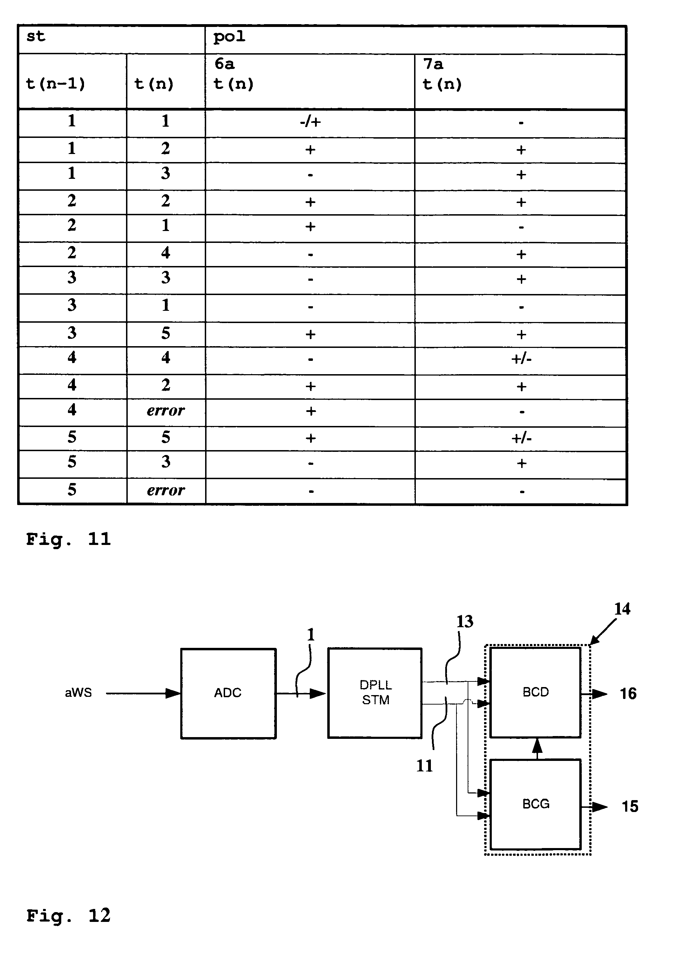

This is performed according to the invention by an apparatus comprising an analog/digital converter ADC, a digital phase lock loop DPLL, a state machine STM and an ATIP detector 14, which comprises a bi-phase channel bit detector BCD and a bi-phase clock generator BCG as shown in Figure 12. The analog wobble signal aWS is applied to analog/digital converter ADC, which provides a digital wobble signal 1, which is a kind of continuous phase frequency shift keying signal. The digital wobble signal 1 is applied to a digital phase lock loop DPLL, which supplies a state machine STM used for phase detection in the range of +/- 2π, which means in total a range of 4π. The state machine STM outputs a phase trellis signal 13, which is used for bi-phase detection in said bi-phase clock generator BCG and bi-phase channel bit detector BCD. The bi-phase clock generator BCG and bi-phase channel bit detector BCD form a so-called called ATIP detector 14 for recovering both the bi-phase clock 15 and bi-phase channel bit 16 of the binary code inside the analog wobble signal aWS. More details of the digital phase lock loop DPLL, which in an advantageous manner in connection with a phase trellis is used for both clock detection and bi-phase signal detection, are shown in Figure 3. The incoming digital wobble signal 1 is applied to a polyphase filter 2 followed by a slicer 3 supplying a first and a second phase detector. The polyphase filter 2 is five tap polyphase filter 2, which interpolates the digital wobble signal 1 to the right channel bit clock sample and said slicer 3 is a variable auto-slicer 3, with a bandwidth between 250 Hz and 2 kHz, which cuts off the DC-offset of the output of the polyphase filter 2. The first phase detector comprises a first multiplier 4 and a first integrate-and-dump circuit 6. Said integrate-and-dump circuit 6 is applied to said first multiplier 4 and forms a correlator, which correlates the incoming digital wobble signal 1 with a locally generated sinusoidal wobble frequency. The digital wobble signal 1 is therefore multiplied with a sine wave signal in said first multiplier 4 and applied to said integrate-and-dump circuit 6, which receives also output signals from a digital time oscillator 9 and a wobble phase counter 10. The wobble phase counter 10 generates a digital ramp, which corresponds to the phase of the locally regenerated wobble frequency and is used as an input of a cos LUT of the integrate-and-dump circuit 6. Cos LUT means cosinus look up table. The first phase detector forms a quadrature phase detector connected to a filter 8 of the digital phase lock loop DPLL. The output of said filter 8 is applied to said digital time oscillator 9, which controls with its two outputs said polyphase filter 2. The use of the correlator in the first phase detector has the advantage of high noise rejection. The digital time oscillator 9 of the digital phase lock loop DPLL is a modulo counter, which locks to the channel bit clock of the incoming wobble signal 1. The wobble phase counter 10 generates also a strobe signal 11 at the start and at half of the digital ramp, so that the strobe signals 11 indicate the positive zero crossing points of the 44.1 kHz signal, which means at two times of the wobble frequency. The local wobble, which is generated in the digital phase lock loop DPLL, has π/2 degrees phase shift, which is also called in quadrature, which means two signals with a 90 degree phase difference. The increment of the digital time oscillator 9 is adapted by the filter 8 of the in quadrature phase detector, which is the first phase detector.

The second phase detector, which is formed by a second multiplier 5 and a second integrate-and-dump circuit 7, generates an in-phase local wobble signal, which is also a multiplication of a locally regenerated sine wave with the incoming wobble signal 1, however, with a phase shift of 90 degree phase difference in comparison to the first multiplier 4. The second phase detector is an in-phase detector, which also integrates and dumps the result of the multiplication over one ATIP wobble period.

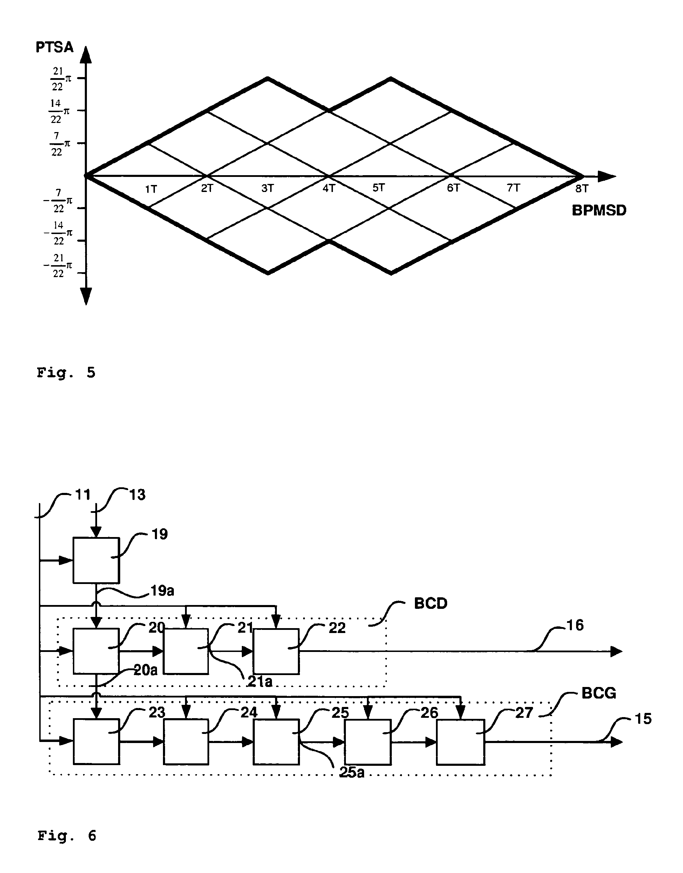

The in-phase and quadrature phase detector only detect a phase shift of +/- π/2 degrees, which means a range of 180 degrees, however, the phase is shifted with +/- π in a synchronisation position and requires in such way a +/- 2π phase detector. A state machine STM supplied by said in-phase and quadrature phase signals of the first and the second phase detector solves this problem. Said state machine STM serves as a third phase detector 12. The in-phase and quadrature phase detector signals are used to form a phase trellis diagram shown in Figure 5 and a phase trellis method with a maximum likelihood detector is used. The output signals of said three phase detectors are shown in Figure 4. Figure 4 shows the phase relation ship between said three phase detectors related to a phase axis P. The amplitude A of a quadrature phase signal 6a, which is the output signal of the first phase detector comprising the first integrate-and-dump circuit 6 in Figure 3 is shown in the upper diagram of Figure 4. The amplitude A of the in-phase signal 7a, which is the output signal of the second phase detector comprising the second integrate-and-dump circuit 7 in Figure 3 is shown in the middle diagram of Figure 4. The diagram below in Figure 4 illustrates an extended amplitude eA at an output of the state machine STM related to the phase axis P, which is uniform used for all three diagrams. An extended amplitude eA in the range of -4 to +4 is used because the phase of the third phase detector 12 shifts in four π/2 intervals. The phase axis P is divided into five states st1 to st5 according to zero crossing points of the in-phase signal 7a or quadrature phase signal 6a in a distance to a zero crossing point of the quadrature phase signal 6a having a phase deviation of zero degree. The arithmetic mean value of the phase trellis signal 13 of the bi-phase-mark modulation is zero per definition, so that the digital phase lock loop DPLL is locked to the center frequency of the ATIP wobble signal. The state table shown in Figure 11 illustrates the state transitions of the +/- 2π phase detector. The +/- 2π phase detector is built with state machine STM, which changes the states at the zero crossing points of the in-phase signal 7a or quadrature phase signal 6a shown in Figure 4. The state table in Figure 11 shows the polarity pol of the quadrature phase signal 6a and the in-phase signal 7a at a moment t(n) corresponding to a state change or the same state st at a moment t(n -1) previous to said moment t(n). The state machine STM generates in such a way a phase trellis signal 13 illustrated as extended amplitude eA in the diagram below in Figure 4, which is derived from the in-phase signal 7a and the quadrature phase signal 6a shown in the upper diagrams of Figure 4. The phase trellis for the bi-phase-mark code with a frequency deviation of +/- 1 kHz, a symbol frequency of 6.3 kHz and a carrier frequency of 22.05 kHz is shown in Figure 5. Figure 5 illustrates the phase trellis signal amplitude PTSA related to a bi-phase mark symbol period BPMSD, wherein 1T corresponds to one wobble period. The phase trellis signal amplitude PTSA value of 7/22π, which represents the phase shift during a single wobble period, results from the fact that the wobble frequency is altered to 23.05 kHz for a 1 in the bi-phase mark symbol and is altered to 21.05 kHz for a 0 in the bi-phase mark symbol. A bi-phase mark symbol has duration of 1/(6300Hz), which means that a bi-phase mark symbol is represented by 3.5 wobble periods. The phase shift between the modulated signal and a constant center frequency of 22.05 kHz for a bi-phase mark symbol interval is consequently (1kHz/22.05kHz)*3.5*2*π = approximately 7/22π for a 1 and (-1kHz/22.05kHz)*3.5*2*π = approximately -7/22π for a 0. Due to the fact that only 1T, 2T and 3T periods occur in the synchronisation interval of the biphase mark data stream results a maximum phase trellis signal amplitude PTSA value of +-21/22π as shown in Figure 5.

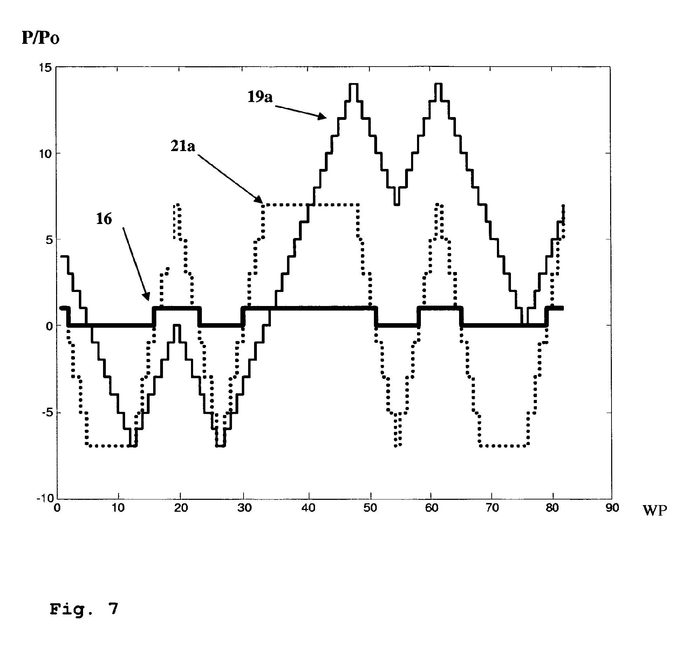

Details of ATIP detector 14 are shown in Figure 6. The ATIP detector 14 comprises a bi-phase channel bit detector BCD and a bi-phase clock recovery circuit BCG. The biphase channel bit detector BCD uses the phase trellis method to detect the bi-phase channel bits 16 of the ATIP wobble signal. The incoming phase trellis signal 13, served by the +/- 2π phase detector 12, is first interpolated by an interpolator 19. The 44.1 kHz strobe signal 11, which is generated by the wobble phase counter 10 is used for said interpolation and the interpolated phase trellis signal 19a is applied to a matched filter with the transfer function H(z) = 1-z⁻⁷. The matched filter consists of a delay line 20 and an adder 21. The filter is matched to the 7 times 44.1 kHz periods of one bi-phase channel bit and a comparator 22 applied to said matched filter checks the slope of the phase trellis by comparing the output of the matched filter against the polarity. Said transfer function H(z) = 1-z⁻⁷ is used to output a zero in case that the difference between a current value and a previous value in said interpolation stage becomes smaller zero. Figure 7 shows in one diagram superimposed the detected bi-phase channel bit signal 16 provided by said comparator 22, the standardised filtered matched filter output signal 21a and the standardised interpolated phase trellis signal 19a. That there are shown standardised signals is expressed by the standardised amplitude axis P/Po and the signals are illustrated over a number of twofold wobble periods WP.

The bi-phase clock generator BCG generates the bi-phase clock 15 to get the optimum sample time for the bi-phase channel bit 16. The bi-phase clock generator BCG, shown in Figure 6, comprises a matched filter 23 with transfer function H(z)= z⁻⁶ - z⁻⁸, a phase error detector 24 having a filter output gain stage, a phase error accumulator 25, a threshold detector 26 and a pulse generator 27, which are serial connected. The 44.1 kHz strobe signal 11, which is generated by the wobble phase counter 10 and the delayed interpolated phase trellis signal 20a are applied to said bi-phase clock generator BCG. The delay line 20 is thereby used twice for the bi-phase channel bit detector BCD and the bi-phase clock recovery circuit BCG.

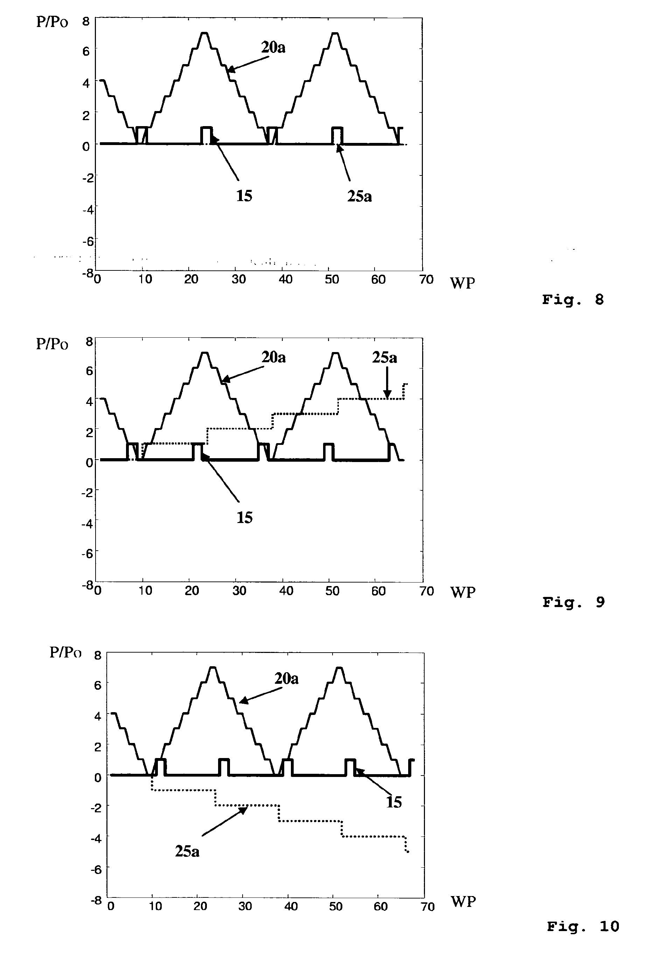

The bi-phase clock phase error is minimized in this circuit by accumulating the matched filter output each biphase clock period. The minimum phase error occurs if the bi-phase clock strobe is generated on the inflection point of the phase trellis and threshold detector 26 generates an impulse, which shifts the phase of the pulse generator 27 by +1 or -1, if the phase error accumulator signal is above an adjusted maximum or below a minimum threshold value. The optimum sampling point of the bi-phase channel bit signal 16 is reached if the bi-phase clock strobe is generated in the inflection point of the phase trellis. Figures 8 to 10 show the lock-in behavior of the bi-phase clock 15 for 1T sequences over several wobble periods WP in standardised amplitude P/Po diagrams. The delayed interpolated phase trellis signal 20a is used to derive a phase error signal 25a, which controls said pulse generator 27. The phase error signal 25a is zero if the bi-phase clock 15 is in phase as shown in Figure 8. Figure 9 illustrates a trailing bi-phase clock 15 and the corresponding phase error signal 25a and Figure 10 illustrates a leading bi-phase clock 15 and the corresponding phase error signal 25a.

As shown by the exemplary embodiment, a method and an arrangement for digital recovering a binary DC-free code from a frequency modulated analog signal aWS with digital means exclusively and for high-speed applications and with low expenditure is provided. The arrangement extracts the center frequency of the modulated signal aWS and generates the bi-phase clock 15 as well as the bi-phase channel bit 16 of said binary code. A digital phase lock loop DPLL with an in phase and an in quadrature phase detector is used to form a phase trellis, which in connection with a strobe signal 11 generated by said digital phase lock loop DPLL is used for bi-phase channel bit 16 recovering and is also used in connection with a maximum likelihood detection for bi-phase clock 15 recovering. The phase error signal of the maximum likelihood detection provides finally a bi-phase clock signal 15, which is exactly in time with the optimum sampling point for the bi-phase channel bit 16 and binary code signal respectively. Said maximum likelihood detection comprises also an interpolation between each of the phase trellis values following each other for providing interpolated phase trellis values 19a to ensure that a bi-phase channel bit signal 16 value 1 is provided if a preceding phase trellis value is smaller than the following one and that a biphase channel bit signal 16 value 0 is provided if a preceding phase trellis value is a bigger one. It ensures furthermore that a clock phase error signal 25a is zero if the bi-phase clock signal 15 is in time with the bi-phase channel bit signal 16.

The gain of the digital phase lock loop DPLL should be selected as small as possible regarding to the closed loop transfer function of the digital phase lock loop DPLL to hold the digital phase lock loop DPLL at the center frequency. The digital phase lock loop DPLL low pass filter should also not exceed twice the wobble center frequency and carrier frequency respectively.

It is understood that the invention is not limited to this exemplary embodiment and that specified features can also expediently be combined or modified without departing from the scope of the present invention.

The method and the arrangement according to the invention is particularly advantageous in that it may easily be used for various kinds of recovering a binary DC-free code from a frequency modulated signal. This is especially useful for an implementation in integrated circuits using digital means exclusively.

## Claims

1. An arrangement for recovering a frequency-modulated binary DC-free code from a frequency-modulated signal (1) comprising:
an analog/digital converter (ADC) supplying
a digital phase lock loop (DPLL) having a first phase detector providing an in-phase detector signal (7a) and a second phase detector providing a quadrature phase detector signal (6a) of the analog/digital converted frequency-modulated signal (1), **characterized by**,
a third phase detector (12) for detecting a phase shift between said in-phase detector signal (7a) and said in quadrature phase detector signal (6a) and
a bi-phase channel bit detector (BCD) as well as a bi-phase clock generator (BCG) both connected to said third phase detector (12) and a strobe signal (11) output of the digital phase lock loop (DPLL) for providing a bi-phase channel bit signal (16) and a bi-phase clock signal (15), which is in time with the sampling point for the bi-phase channel bit signal (16) for recovering said binary code.

2. Arrangement according to claim 1, wherein the third phase detector (12) is a state machine (STM) to generate a phase trellis signal (13) from said in phase detector signal (7a) and said in quadrature phase detector signal (6a).

3. Arrangement according to claim 1, wherein said strobe signal (11) output of the digital phase lock loop (DPLL) is an output of a wobble phase counter (10) of said digital phase lock loop (DPLL).

4. Arrangement according to claim 1, wherein the bi-phase channel bit detector (BCD) comprises a matched filter (20, 21) connected to a comparator (22) comparing the output of the matched filter (20, 21) against the polarity of a phase trellis provided by said third phase detector (12) for recovering the bit length of the bi-phase channel bit signal (16).

5. Arrangement according to claim 1, wherein the bi-phase clock generator (BCG) comprises serial connected a matched filter (23), a phase error detector (24), a phase error accumulator (25), a threshold detector (26) and a pulse generator (27) controlled by said threshold detector (26) to generate an impulse, which shifts the phase of the pulse generator (27) for providing a bi-phase clock signal (15), which is in time with the sampling point for the bi-phase channel bit signal (16) for recovering said binary code.

6. Arrangement according to claim 1, wherein an analog/digital converter (ADC) provides the frequency-modulated signal (1) converted from an analog wobble signal (aWS).

7. A method for recovering a frequency-modulated binary DC-free code from a frequency-modulated signal (1) comprising the steps of:
- analog/digital conversion of the frequency-modulated signal (1),
- generating an in-phase detector signal (7a) and a quadrature phase detector signal (6a) of the analog/digital converted frequency-modulated signal (1) by using a digital phase lock loop (DPLL),
- forming a phase trellis from said in-phase detector signal (7a) and said in quadrature phase detector signal (6a),
- applying a maximum likelihood detection to the phase trellis by using a matched filter (21, 22, 23) to provide a bi-phase channel bit signal (16) and a clock phase error signal (25a) which shifts the phase of a pulse generator (27) for providing a bi-phase clock signal (15), which is in time with the sampling point for the bi-phase channel bit signal (16) for recovering said binary code.

8. A method according to claim 7, wherein said applying a maximum likelihood detection to the phase trellis by using a matched filter (21, 22, 23) further comprises an interpolation between each of the phase trellis values following each other for providing interpolated phase trellis values (19a) to ensure that a bi-phase channel bit signal (16) value 1 is provided if a preceding phase trellis value is smaller than the following one and that a bi-phase channel bit signal (16) value 0 is provided if a preceding phase trellis value is a bigger one as well as to ensure that a clock phase error signal (25a) is zero if the bi-phase clock signal (15) is in time with the bi-phase channel bit signal (16).

9. A method according to claim 7, wherein a +/- 2 π phase detector (12) is used for said phase trellis generation.

10. A method according to claim 7, wherein said binary DC-free code comprises ATIP information in a frequency-modulated signal (1) and the frequency-modulated signal (1) is converted from an analog wobble signal (aWS) read from an optical recording medium.

## Patentansprüche

1. Anordnung zum Wiedergewinnen eines frequenzmodulierten binären gleichstromfreien Codes aus einem frequenzmodulierten Signal (1), wobei die Anordnung umfasst:
einen Analog/Digital-Umsetzer (ADC), der einen digitalen Phasenregelkreis (DPLL) speist, der einen ersten Phasendetektor, der ein In-Phase-Detektorsignal (7a) des analog/digital umgesetzten frequenzmodulierten Signals bereitstellt (1), und einen zweiten Phasendetektor, der ein Quadraturphase-Detektorsignal (6a) des analog/digital umgesetzten frequenzmodulierten Signals (1) bereitstellt, aufweist, **gekennzeichnet durch**
einen dritten Phasendetektor (12) zum Detektieren einer Phasenverschiebung zwischen dem In-Phase-Detektorsignal (7a) und dem Quadraturphase-Detektorsignal (6a) und einen Zweiphasen-Kanalbitdetektor (BCD) sowie einen Zweiphasen-Taktgenerator (BCG), die beide mit dem dritten Phasendetektor (12) und mit einem von dem digitalen Phasenregelkreis (DPLL) ausgegebenen Freigabesignal (11) verbunden sind, um ein Zweiphasen-Kanalbitsignal (16) und ein Zweiphasen-Taktsignal (15), das mit dem Abtastpunkt für das Zweiphasen-Kanalbitsignal (16) im Takt ist, bereitzustellen, um den binären Code wiederzugewinnen.

2. Anordnung gemäß Anspruch 1, bei der der dritte Phasendetektor (12) eine Zustandmaschine (STM) zum Erzeugen eines Phasen-Trellis-Signals (13) aus dem In-Phase-Detektorsignal (7a) und aus dem Quadraturphase-Detektorsignal (6a) ist.

3. Anordnung gemäß Anspruch 1, bei der das von dem digitalen Phasenregelkreis (DPLL) ausgegebene Freigabesignal (11) ein Ausgangssignal eines Wobbelphasenzählers (10) des digitalen Phasenregelkreises (DPLL) ist.

4. Anordnung gemäß Anspruch 1, bei der der Zweiphasen-Kanalbitdetektor (BCD) ein angepasstes Filter (20, 21) umfasst, das mit einem Komparator (22) verbunden ist, der das Ausgangssignal des angepassten Filters (20, 21) mit der Polarität eines durch den dritten Phasendetektor (12) bereitgestellten Phasen-Trellis vergleicht, um die Bitlänge des Zweiphasen-Kanalbitsignals (16) wiederzugewinnen.

5. Anordnung gemäß Anspruch 1, bei der der Zweiphasen-Taktgenerator (BCG) in Reihe geschaltet umfasst: ein angepasstes Filter (23), einen Phasenfehlerdetektor (24), einen Phasenfehlerakkumulator (25), einen Schwellenwertdetektor (26) und einen Impulsgenerator (27), der durch den Schwellenwertdetektor (26) gesteuert wird, um einen Impuls zu erzeugen, der die Phase des Impulsgenerators (27) verschiebt, um ein Zweiphasen-Taktsignal (15) bereitzustellen, das mit dem Abtastpunkt für das Zweiphasen-Kanalbitsignal (16) im Takt ist, um den binären Code wiederzugewinnen.

6. Anordnung gemäß Anspruch 1, bei der ein Analog/DigitalUmsetzer (ADC) das aus einem analogen Wobbelsignal (aWS) umgesetzte frequenzmodulierte Signal (1) bereitstellt.

7. Verfahren zum Wiedergewinnen eines frequenzmodulierten binären gleichstromfreien Codes aus einem frequenzmodulierten Signal (1), wobei das Verfahren die folgenden Schritte umfasst:
- Analog/Digital-Umsetzung des frequenzmodulierten Signals (1),
- Erzeugen eines In-Phase-Detektorsignals (7a) und eines Quadraturphase-Detektorsignals (6a) aus dem analog/digital umgesetzten frequenzmodulierten Signal (1) unter Verwendung eines digitalen Phasenregelkreises (DPLL),
- Bilden eines Phasen-Trellis aus dem In-Phase-Detektorsignal (7a) und aus dem Quadraturphase-Detektorsignal (6a),
- Anwenden einer Maximum Likelihood Detection auf das Phasen-Trellis unter Verwendung eines angepassten Filters (21, 22, 23), um ein Zweiphasen-Kanalbitsignal (16) und ein Taktphasenfehlersignal (25a), das die Phase eines Impulsgenerators (27) verschiebt, um ein Zweiphasen-Taktsignal (15) bereitzustellen, das mit dem Abtastpunkt für das Zweiphasen-Kanalbitsignal (16) im Takt ist, bereitzustellen, um den binären Code wiederzugewinnen.

8. Verfahren gemäß Anspruch 7, bei dem das Anwenden einer Maximum Likelihood Detection auf das Phasen-Trellis unter Verwendung eines angepassten Filters (21, 22, 23) ferner eine Interpolation zwischen jedem der aufeinander folgenden Phasen-Trellis-werte umfasst, um interpolierte Phasen-Trellis-Werte (19a) bereitzustellen, um sicherzustellen, dass ein Wert 1 des Zweiphasen-Kanalbitsignals (16) bereitgestellt wird, wenn ein vorheriger Phasen-Trellis-Wert kleiner als der folgende ist, und dass ein Wert 0 des Zweiphasen-Kanalbitsignals (16) bereitgestellt wird, wenn ein vorheriger Phasen-Trellis-Wert ein größerer ist, sowie um sicherzustellen, dass ein Taktphasen-Fehlersignal (15) null ist, wenn das Zweiphasen-Taktsignal (15) mit dem Zweiphasen-Kanalbitsignal (16) im Takt ist.

9. Verfahren gemäß Anspruch 7, bei dem für die Phasen-Trellis-Erzeugung ein ±2π-Phasendetektor (12) verwendet wird.

10. Verfahren gemäß Anspruch 7, bei dem der binäre gleichstromfreie Code ATIP-Informationen in einem frequenzmodulierten Signal (1) umfasst und das frequenzmodulierte Signal (1) aus einem analogen wobbelsignal (aWS) umgesetzt wird, das von einem optischen Aufzeichnungsmedium gelesen wird.

## Revendications

1. Dispositif de récupération d'un code binaire exempt de courant continu modulé en fréquence à partir d'un signal modulé en fréquence (1) comprenant :
un convertisseur analogique-numérique (CAN) fournissant une boucle à verrouillage de phase numérique (DPLL) possédant un premier détecteur de phase fournissant un signal de détection en phase (7a) et un deuxième détecteur de phase fournissant un signal de détection de phase en quadrature (6a) du signal modulé en fréquence converti analogique-numérique (1), **caractérisé par**
un troisième détecteur de phase (12) pour détecter un déplacement de phase entre ledit signal de détection en phase (7a) et ledit signal de détection de phase en quadrature (6a) et
un détecteur de bits canal bi-phase (BCD) ainsi qu'un générateur d'horloge bi-phase (BCG) tous deux connectés audit troisième détecteur de phase (12) et une sortie de signal d'échantillonnage (11) de la boucle à verrouillage de phase numérique (DPLL) pour fournir un signal de bit canal bi-phase (16) et un signal d'horloge bi-phase (15), qui est synchronisé avec le point d'échantillonnage du signal de bit canal bi-phase (16) pour récupérer ledit code binaire.

2. Dispositif selon la revendication 1, où le troisième détecteur de phase (12) est une machine à états (STM) permettant de générer un signal en treillis de phase (13) à partir dudit signal de détection en phase (7a) et dudit signal de détection de phase en quadrature (6a).

3. Dispositif selon la revendication 1, où ladite sortie du signal d'échantillonnage (11) de la boucle de phase bloquée numérique (DPLL) est une sortie d'un compteur de phase ondulatoire (10) de ladite boucle à verrouillage de phase numérique (DPLL).

4. Dispositif selon la revendication 1, où le détecteur de bits canal bi-phase (BCD) comprend un filtre adapté (20, 21) connecté à un comparateur (22) comparant la sortie du filtre adapté (20, 21) par rapport à la polarité d'un treillis de phase fourni par ledit troisième détecteur de phase (12) pour récupérer la longueur binaire du signal de bit canal bi-phase (16).

5. Dispositif selon la revendication 1, où le générateur d'horloge biphase (BCG) comprend un filtre adapté connecté en série (23), un détecteur d'erreurs de phase (24), un accumulateur d'erreurs de phase (25), un détecteur de seuil (26) et un générateur d'impulsion (27) commandé par ledit détecteur de seuil (26) pour générer une impulsion, qui déplace la phase du générateur d'impulsion (27) pour fournir un signal d'horloge bi-phase (15), qui est synchronisé avec le point d'échantillonnage du signal de bit canal bi-phase (16) pour récupérer ledit code binaire.

6. Dispositif selon la revendication 1, où un convertisseur analogique-numérique (CAN) fournit le signal modulé en fréquence (1) converti à partir d'un signal ondulatoire analogique (aWS).

7. Procédé de récupération d'un code binaire exempt de courant continu modulé en fréquence à partir d'un signal modulé en fréquence (1) comprenant les étapes suivantes :
- conversion analogique-numérique du signal modulé en fréquence (1),
- génération d'un signal de détection en phase (7a) et d'un signal de détection de phase en quadrature (6a) du signal modulé en fréquence converti analogique-numérique (1) à l'aide d'une boucle à verrouillage de phase numérique (DPLL),
- formation d'un treillis de phase à partir dudit signal de détection en phase (7a) et dudit signal de détection de phase en quadrature (6a),
- application d'une détection de probabilité maximum au treillis de phase à l'aide d'un filtre adapté (21, 22, 23) pour fournir un signal de bit canal bi-phase (16) et un signal d'erreur de phase d'horloge (25a) qui déplace la phase d'un générateur d'impulsion (27) pour fournir un signal d'horloge bi-phase (15), qui est synchronisé avec le point d'échantillonnage du signal de bit canal bi-phase (16) pour récupérer ledit code binaire.

8. Procédé selon la revendication 7, où ladite application d'une détection de probabilité maximum au treillis de phase à l'aide d'un filtre adapté (21, 22, 23) comprend en outre une interpolation entre chacune des valeurs de treillis de phase qui se suivent l'une l'autre pour fournir des valeurs de treillis de phase interpolées (19a) pour garantir qu'une valeur 1 de signal de bit canal bi-phase (16) est fournie si une valeur de treillis de phase précédente est inférieure à la valeur suivante et qu'une valeur 0 de signal de bit canal bi-phase (16) est fournie si une valeur de treillis de phase précédente est une valeur supérieure, ainsi que pour garantir qu'un signal d'erreur de phase d'horloge (25a) est nul si le signal d'horloge bi-phase (15) est synchronisé avec le signal de bit canal bi-phase (16).

9. Procédé selon la revendication 7, où un détecteur de phase de +/- 2 n (12) est utilisé pour ladite génération de treillis de phase.

10. Procédé selon la revendication 7, où ledit code binaire exempt de courant continu comprend des informations ATIP dans un signal modulé en fréquence (1) et le signal modulé en fréquence (1) est converti depuis un signal ondulatoire analogique (aWS) lu à partir d'un support d'enregistrement optique.
